# EUROPÄISCHE PATENTSCHRIFT

(11) **EP 0 620 672 B1**
(45) Veröffentlichungstag und Bekanntmachung des Hinweises auf die Patenterteilung: **15.09.1999**
(21) Anmeldenummer: 93118320.6
(22) Anmeldetag: 12.11.1993
(51) Int. Cl.: H04N 1/40

(54) **Verfahren zur Optimierung von frequenzmodulierten Rastern unter Nutzung von Schwellwertgebirgen**
Method for optimizing frequency modulated halftone screens using threshold value mountains
Procédé d'optimisation de trames modulées en frèquence utilisant des montagnes de valeurs de seuils

(30) Priorität: 08.04.1993 DE 4311575
(43) Veröffentlichungstag der Anmeldung: 19.10.1994
(73) Patentinhaber: Heidelberger Druckmaschinen Aktiengesellschaft, 69115 Heidelberg (DE)
(72) Erfinder: Kerz, Ludo, D-55291 Saulheim (DE)

(56) Entgegenhaltungen:
- EP-A- 0 141 869
- EP-A- 0 201 674
- EP-A- 0 503 645
- FR-A- 2 298 242
- GB-A- 2 196 508
- US-A- 4 752 822
- Proceedings SPIE - The International Soci- ety for Optical Engineering; Image Processing Algorithms and Techniques II; 25 Februari - 1March 1991, San Jose, Ca-

## Beschreibung

Die Erfindung bezieht sich auf ein Gebiet der elektronischen Reproduktionstechnik und betrifft ein Verfahren zur Optimierung von frequenzmodulierten Rastern unter Nutzung von Schwellwertgebirgen. Solche Verfahren werden zur Bildaufzeichnung und insbesondere zur Aufzeichnung farbiger Bilder verwendet.

Unterschiedliche Halbtonwerte (Grauwerte) eines zu reproduzierenden Bildes lassen sich im Druck nur durch eine Flächenmodulation erzeugen, indem die Grauwerte in hochaufgelöste Binärwerte mit nur zwei Helligkeitswerten (Schwarz und Weiß) aufgelöst werden.

Es sind bereits mehrere Aufzeichnungsverfahren bekannt, mit denen sich Farbbilder aufzeichnen lassen.

In der Druckschrift EP 0 141 869 A1 ist ein Verfahren und eine Einrichtung zu Herstellung gerasterter Druckformen beschrieben, bei dem die Druckformen während des Drucks zur Generierung von Farbbildern verwendet werden. Hierbei werden gerasterte Druckformen mit Rastern beliebiger Rasterwinkelung und Rasterweite durch Belichten von Rasterpunkten auf einem Aufzeichnungsmedium mittels eines Aufzeichnungsorgans, dessen Belichtungsstrahl durch ein Steuersignal ein- und ausgeschaltet wird, erzeugt. Das Aufzeichnungsmedium ist in eine Vielzahl von Flächenelementen unterteilt, die in Abhängigkeit des Steuersignals durch den Belichtungsstrahl belichtet werden oder nicht, wobei alle in einer Rastermasche des aufzuzeichnenden gedrehten Rasters belichteten Flächenelemente jeweils einen Rasterpunkt bilden. Es sind mindestens zwei Matrizen in Form von Matrixspeichern vorhanden, wobei den einzelnen Matrixelementen Rasterschwellwerte eines Rasterberges zugeordnet sind, welche die periodische Grundstruktur einer Rastermasche repräsentieren und die für mindestens einen Tonwertbereich in den einzelnen Matrizen unterschiedlich sind.

Während der Aufzeichnung werden für jedes vom Aufzeichnungsorgan überfahrene Flächenelement innerhalb einer Rastermasche diejenigen Matrixelemente in den einzelnen Matrizen festgestellt, deren Lagen innerhalb der jeweiligen Matrizen der Lage des überfahrenen Flächenelementes innerhalb der betreffenden Rastermasche entsprechen. Die Raster-Scnwellwerte der festgestellten Matrix-Elemente werden aufgerufen. Gesteuert von einem Zufallsgenerator wird jeweils einer der aufgerufenen Raster-Schwellwerte per Zufall ausgewählt und mit einem durch Vorlagenabtastung gewonnenen Bildsignalwert verglichen. Aus dem Vergleich wird das Steuersignal für den Belichtungsstrahl abgeleitet, wobei durch den Signalvergleich entschieden wird. ob das betreffende Flächenelement als Teil eines Rasterpunktes zu belichten ist oder nicht.

Weiterhin ist in der Druckschrift GB 2 196 508 A ein Verfahren zur Erzeugung von Rasterpunkten aufgezeigt, bei dem die Rasterpunkte mit Hilfe einer Schablone (template) erzeugt werden, die in einzelne Gitterelemente aufgeteilt ist, denen vorherbestimmte Schwellwerte zugeordnet sind, die bei der Bildaufzeichnung mit dem jeweiligen Bildsignal verglichen werden, wobei die Charakteristik des fotoelektrischen Wandlers, mit dem das Original abgetastet wird, die Rasterwinkelung und die Gradation berücksichtigt werden.

In der französischen Patentanmeldung Nr.: 75 38572 sind ein Bilderzeugungsgenerator und ein Druckverfahren zur Erzeugung von Pseudo-Halbtonbildern beschrieben, bei dem bei der Bildaufzeichnung Zufallswerte zur Erzeugung der einzelnen Druckpunkte verwendet werden.

Bei einem anderen, in der Druckschrift EP 0 503 645 A2 beschriebenen Verfahren werden mittels eines Generators horizontale und vertikale Adressen in Matrixformen erzeugt, die in Verbindung mit gespeicherten Gradationsdaten verwendet werden, um Bilder aufzuzeichnen. Mit Hilfe dieser Matrizen, auch Zufallsmatrizen (Dither Matrices) genannt, wird die Bildaufzeichnung gesteuert. Hierbei ist es ein Ziel, sogenannte Moirebildung, d.h. das Auftreten sich periodisch wiederholender Muster, die das Auge als störend empfindet und die die Bildqualität mindern, zu vermeiden.

Ein weiteres bekanntes Verfahren zur Bildaufzeichnung ist die autotypische Rasterung. Bei der autotypischen Rasterung (Punktrasterung) erfolgt die Flächenmodulation bei der Bildaufzeichnung dadurch, daß die Grauwerte des Bildes in Rasterpunkte unterschiedlicher Größe umgewandelt, aufgezeichnet und gedruckt werden, wobei die Rasterpunkte in einer regelmäßigen Rasterstruktur mit sich periodisch wiederholenden Rastermaschen angeordnet sind. Um störende Moirestrukturen zu minimieren, werden die Punktraster der einzelnen Druckfarben unter unterschiedlichen Rasterwinkeln angeordnet.

Aus der DE-A-28 27 596 ist ein autotypisches Rasterverfahren zur Erzeugung von Punktrastern beliebiger Rasterwinkelung mit Hilfe eines Schwellwertgebirges bekannt, bei dem eine Matrix in eine Vielzahl von Matrixelementen unterteilt und jedem Matrixelement ein Schwellwert zugeordnet wird. Die Gesamtheit der Schwellwerte, als Schwellwertgebirge oder Rasterberg bezeichnet, repräsentiert die sich wiederholende Grundstruktur für jede Rastermasche des Punktrasters.

Das Aufzeichnungsmaterial für das gerasterte Bild ist in eine Vielzahl von Flächenelementen unterteilt. Bei der Aufzeichnung des gerasterten Bildes in einem Ausgabegerät (Recorder) werden die Rasterpunkte in den einzelnen Rastermaschen des Punktrasternetzes aus belichteten Flächenelementen (Belichtungspixel; Devicepixel) zusammengesetzt. Die Überprüfung, ob ein Devicepixel als Teil eines Rasterpunktes zu belichten ist oder nicht, erfolgt durch einen Vergleich der entsprechenden Grauwerte des Bildes mit den Schwellwerten des Schwellwertgebirges, wobei die Vergleichsergebnisse als Bits in einer sogenannten Bitmap festgehalten werden, in der jedes gesetzte Bit einem belichteten Flächenelement oder Devicepixel (oder auch umgekehrt im Fall einer Negativdarstellung entspricht. Die Bitmap hat im allgemeinen die Größe der Aufzeichnungsfläche. Anhand der Bitmap erfolgt die Steuerung des Belichtungsstrahles im Recorder.

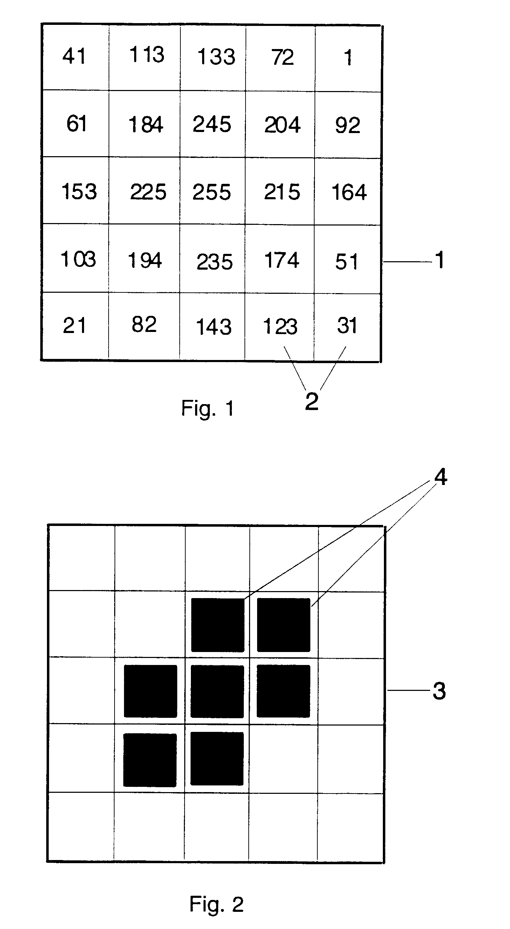

Die in der vorliegenden Beschreibung später zur besseren Verdeutlichung der Zusammenhänge, die zur Erfindung geführt haben gezeigte Fig. 1, ist ein Beispiel für ein Schwellwertgebirge für eine autotypische Rasterung angegeben. Hierbei handelt es sich um eine zweidimensionale Schwellwert-Matrix (1) mit 5 x 5 Matrixelementen (2), die mit den Schwellwerten 1 bis 255 gefüllt sind und zwar für den Fall, daß die einzelnen Grauwerte des Bildes durch Zahlen zwischen 0 und 255 dargestellt werden, wobei die Zahl 0 ,,Schwarz" und die Zahl 255 "Weiß" entspricht. Die Schwellwert-Matrix (1) hat im allgemeinen die Größe einer Rastermasche des Punktrasters. Um beispielsweise den Grauwert 192 (Flächendeckung 25% zu erzeugen, wird für jedes Matrixelement (2) innerhalb der Schwellwert-Matrix (1) geprüft, ob der Grauwert 192 kleiner als der dem Matrixelement (2) zugeordnete Schwellwert ist. Wenn dies der Fall ist, wird das betreffende Bit in der Bitmap gesetzt und das entsprechende Devicepixel geschwärzt anderenfalls wird das entsprechende Bit nicht gesetzt.

Fig. 2 zeigt einen nach einem autotypischen Rasterverfahren erzeugten Rasterpunkt innerhalb einer Rastermasche (3). Der Rasterpunkt besteht aus 7 belichteten Devicepixeln (4) von 25 möglichen Devicepixeln (4) innerhalb einer Rastermasche (3) und präsentiert somit eine Flächendeckung von ca. 25% beziehungsweise den Grauwert 192. Typischerweise werden die Schwellwerte so vergeben, daß die gesetzten Bits in der Bitmap beziehungsweise die belichteten Devicepixel bei einem zunehmendem Grauwert eine zusammenhängende, wachsende schwarze Fläche (Rasterpunkt, Druckpunkt) bilden.

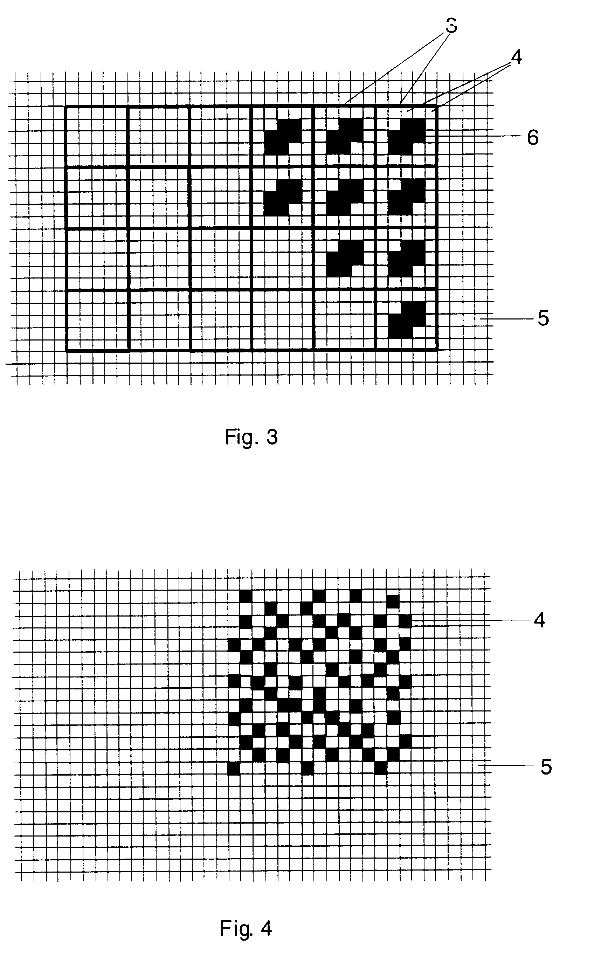

Da die Schwellwert-Matrix (1) für das Schwellwertgebirge deutlich kleiner ist als die Bitmap, wird die Zuordnung der Bits der Bitmap zu den Schwellwerten der Schwellwert-Matrix (1) in x- und y-Richtung der Bitmap fortlaufend wiederholt, was in Fig. 3 dargestellt ist.

Fig. 3 zeigt die periodische Zuordnung der Schwellwerte der bzw. der einzelnen Rastermaschen (3) eines Punktrasters zu einer Bitmap (5). In den jeweils aus 25 x 25 Devicepixeln (4) bestehenden Rastermaschen (3) sind einige Rasterpunkte (6) mit einer Flächendeckung von 25% angedeutet. Da die Zuordnung der Schwellwert-Matrix (1) in x- und y-Richtung fortlaufend wiederholt wird, führt dies zur Ausbildung einer Gitterstruktur.

Alternativ zur autotypischen Rasterung kann die Flächenmodulation der Druckfarben auch nach einem Verfahren zur frequenzmodulierten Rasterung, beispielsweise nach der DE-A- 2931 098, erfolgen. Bei der frequenzmodulierten Rasterung werden die Grauwerte des Bildes durch eine Anordnung von kleinen gleich großen Druckpunkten (Devicepixel) wiedergegeben, die in der Aufzeichnungsfläche mehr oder weniger zufällig ausgewählt werden. Die Anzahl der Devicepixel je Flächeneinheit bestimmt den wiedergegebenen Grauwert.

Zur frequenzmodulierten Rasterung sind verschiedene Verfahren bekannt, z.B. "error diffusion ordered dither", etc. Alle Verfahren beruhen darauf, daß bei der Entscheidung, ob ein Devicepixel gesetzt wird oder nicht, der Zustand der Nachbarpixel mit einer gewissen Gewichtung berücksichtigt wird. Desweiteren wird auch eine Fehlerfortschreibung von einem Devicepixel zum nächsten vorgenommen, d.h. der Zustand des zuletzt gesetzten Devicepixels hat einen Einfluß auf das nächste zu bearbeitende Pixel.

Fig. 4 zeigt ein Beispiel für eine frequenzmodulierte Rasterung. In der Bitmap (5) sind die gesetzten Bits bzw. die entsprechenden Devicepixel (4) mehr oder weniger zufällig innerhalb der Flächeneinheit verteilt und bilden somit keine zusammenhängende Fläche mehr. Dargestellt ist eine Flächendeckung von 25%.

Der Vorteil eines autotypischen Rasterverfahrens mit einem Schwellwertgebirge 30 beruht darauf, daß sowohl in Software als auch in Hardware sehr schnell gerastert werden kann. Bei den herkömmlichen frequenzmodulierten Rasterverfahren sind hingehend für jedes Devicepixel eine Vielzahl von zeitaufwendigen Rechenoperationen erforderlich, die sich nachteilig auf die Arbeitsgeschwindigkeit auswirken.

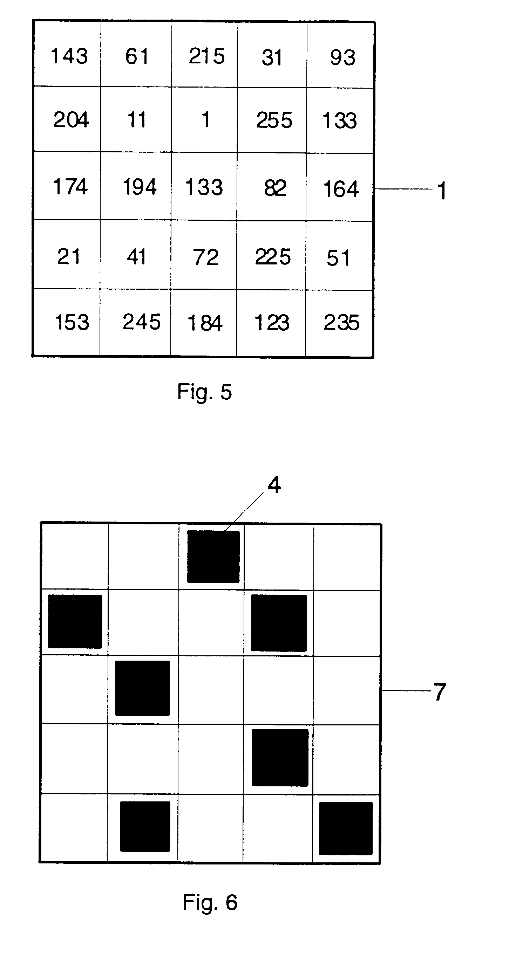

Es ist auch schon bekannt, ein autotypisches und ein frequenzmoduliertes Rasterverfahren miteinander zu kombinieren und ein Schwellwertgebirge mit einer zufälligen Folge von Schwellwerten zu füllen, die keine zusammenhängende Fläche bilden. Hierzu zeigt Fig. 5 eine Schwellwert-Matrix (1) mit einer zufälligen Folge von 5 x 5 Schwellwerten für die frequenzmodulierte Rasterung und Fig. 6 einen durch eine frequenzmodulierte Rasterung erzeugten Rasterpunkt aus 7 zufällig verteilten, belichteten Devicepixeln (4) innerhalb einer Flächeneinheit (7).

Diese Vorgehensweise hat aber den Nachteil, daß sich bei Farbflächen mit konstantem Tonwert auch bei der geschicktesten Auswahl der Zufallsverteilung der Schwellwerte störende Reststrukturen ergeben. Da sich das Schwellwertgebirge in x- und y-Richtung periodisch wiederholt, werden diese Reststrukturen auch über die gesamte Aufzeichnungsfläche wiederholt. Da das Auge für derartige Reststrukturen besonders empfindlich ist, sind diese in der Praxis nicht tolerabel.

Der im Anspruch 1 angegebenen Erfindung liegt daher die Aufgabe zugrunde, ein Verfahren zur Optimierung von frequenzmodulierten Rastern für die Aufzeichnung von Rasterbildern anzugeben, mit dem das Entstehen von störenden Strukturen in der Aufzeichnungsfläche aufgrund der periodischen Wiederholung eines Schwellwertgebirges weitestgehend vermieden und Strukturen im Schwellwertgebirge selbst minimiert werden.

Vorteilhafte Weiterbildungen sind in den Unteransprüchen angegeben.

Die Fig. 1 bis 6 dienen zur Erläuterung des Standes der Technik. Die Erfindung wird nachfolgend anhand der Fig. 7 bis 18 näher erläutert.

Es zeigen:
- Fig. 1: ein Beispiel für ein Schwellwertgebirge zur autotypischen Rasterung (Stand der Technik),
- Fig. 2: ein Beispiel für einen autotypischen Rasterpunkt bei ca. 25% Flächendeckung (Stand der Technik),
- Fig. 3: die periodische Zuordnung eines autotypischen Schwellwertgebirges zur Bitmap, bei der einige Rasterpunkte mit ca. 25% Flächendeckung angedeutet sind (Stand der Technik),
- Fig. 4: ein Beispiel für frequenzmodulierte Rasterung, bei der eine 25%ige Flächendeckung angedeutet ist (Stand der Technik),
- Fig. 5: ein Beispiel für ein Schwellwertgebirge zur frequenzmodulierten Rasterung (Stand der Technik),
- Fig. 6: ein Beispiel für einen frequenzmodulierten Rasterpunkt mit ca. 25% Flächendeckung (Stand der Technik),
- Fig. 7: ein Beispiel für ein Schwellwertgebirge mit verbesserter Wiederholperiode durch einen festen Versatzwert, in dem ein 13%iger frequenzmodulierter Tonwert angedeutet ist,
- Fig. 8: ein Beispiel für ein frequenzmoduliertes Schwellwertgebirge mit verbesserter Wiederholperiode durch zufällige Versatzwerte,
- Fig. 9: ein Beispiel für ein frequenzmoduliertes Schwellwertgebirge mit verbesserter Wiederholperiode unter Verwendung einer nicht rechteckigen Grundform,
- Fig. 10: ein Beispiel für ein frequenzmoduliertes Schwellwertgebirge mit verbesserter Wiederholperiode unter Verwendung mehrerer Teilschwellwertgebirge,
- Fig. 11: Zuordnung der Zahl Null zu einem Element aus dem Schwellwertgebirge, das mit einem Zufallsgenerator bestimmt wird,
- Fig. 12: Unterteilung von vier Quadranten erster Ordnung in vier Gruppen von vier Quadranten zweiter Ordnung,
- Fig. 13: die jeweilige Belegung eines Quadranten jeder Gruppe mit einer weiteren Ordnungszahl,
- Fig. 14: Erzeugung einer Gruppe von vier Quadrantengruppen,
- Fig. 15: Belegung einer weiteren diagonal versetzten Gruppe von vier Quadrantengruppen mit vier weiteren Ordnungszahlen,
- Fig.16: die zweimalige Wiederholung der Belegung einer weiteren diagonal versetzten Gruppe von vier Quadrantengruppen mit vier weiteren Ordnungszahlen,
- Fig. 17: Zuweisung einer Ordnungszahl zu Quadranten durch zweimaliges Abarbeiten der insgesamt 4 Gruppen von 4 Quadrantengruppen u n d
- Fig. 18: Schwellwertgebirge, das aus der Kombination beider Abwandlungen hervorgegangen ist.

Das erfindungsgemäße Verfahren dient zur Minimierung von periodischen Strukturen in der Aufzeichnungsfläche und zur Minimierung von Strukturen innerhalb des Schwellwertgebirges.

### 1. Minimierung von periodischen Strukturen:

Zur Minimierung der periodischen Strukturen kann man zunächst beobachten, daß dann, wenn man das Schwellwertgebirge in der Ausdehnung größer wählt, z. B. 256 x 256 Schwellwerte anstatt 128 x 128, auch geringere Strukturen sichtbar werden, da nun die Wiederholperiode größer ist. Theoretisch könnte man das Problem dadurch lösen, daß man das Schwellwertgebirge so groß wählt, daß die Wiederholperiode nicht mehr auffällt. Praktisch stößt man hierbei sehr schnell auf Grenzen, da der Speicherplatzbedarf quadratisch wächst. Praktische Versuche haben gezeigt, daß hierfür viele Megabyte Speicher notwendig wären. Neben den Kosten und der Verfügbarkeit in bestehenden Geräten ergeben sich auch erhebliche Nachteile in der Handhabung derart großer Datenmengen (Ladezeiten von Festplatte, etc.).

Man kann dieses Problem nun umgehen, ohne daß dadurch der Speicherbedarf erheblich wächst. Ziel ist es mit einem vertretbaren Speicheraufwand eine derartige Wiederholperiode zu erreichen, daß für das Auge in Bereichen glatter Tonwerte keine Strukturen erkennbar sind oder wenigstens entscheidend abgemildert werden. Um dies zu erreichen, wird der Schwellwertspeicher erfindungsgemäß in einer Richtung (z. B. die x-Richtung) deutlich länger bemessen als in der anderen Richtung. Man könnte z. B. die Dimension der rechteckförmigen Schwellwert-Matrix anstatt mit 256 x 256 mit 4096 x 16 Schwellwerten wählen. Dadurch ist in x-Richtung die Wiederholperiode zunächst einmal erheblich gewachsen, allerdings ist sie in y-Richtung deutlich kleiner geworden.

Um dies zu kompensieren, wird die Schwellwert-Matrix in x-Richtung nach wie vor in sich periodisch wiederholenden Bits der Bitmap (5) zugeordnet. In y-Richtung hingegen wird die periodische Zuordnung mit einem Versatz überlagert. Dieser Versatz kann entweder eine immer wieder neu zu bestimmende Zufallszahl sein, wobei sich in y-Richtung eine unendliche Wiederholperiode ergäbe oder ein fester Versatzwert, dessen Auswahl derart getroffen werden muß, daß auch eine hinreichende Wiederholperiode erreicht wird.

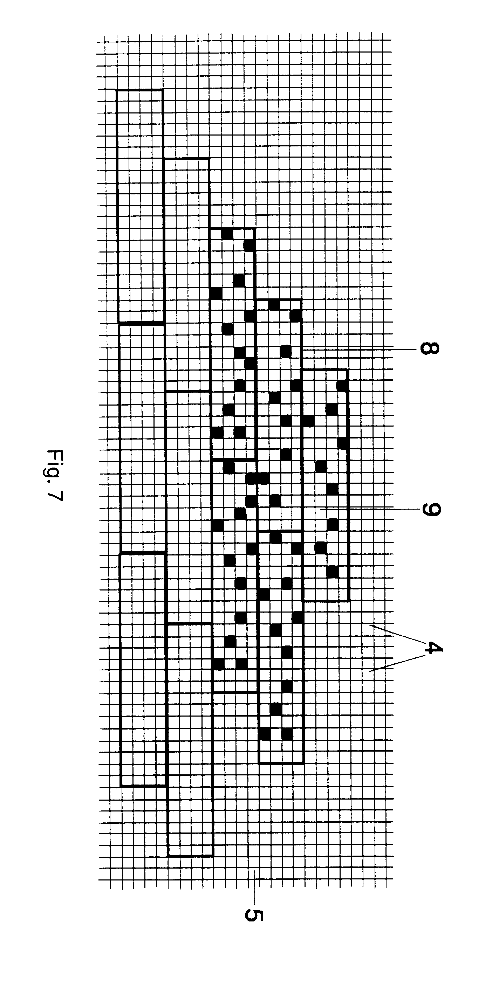

Fig. 7 zeigt ein Beispiel für eine Bitmap (5) mit einer verbesserten Wiederholperiode durch einen festen Versatz (8) der Schwellwert-Matrix innerhalb der Bitmap (5). Die Devicepixel (4) innerhalb der einzelnen rechteckförmigen Bitmap-Bereiche(9) deuten einen 13%igen, frequenzmodulierten Tonwert an.

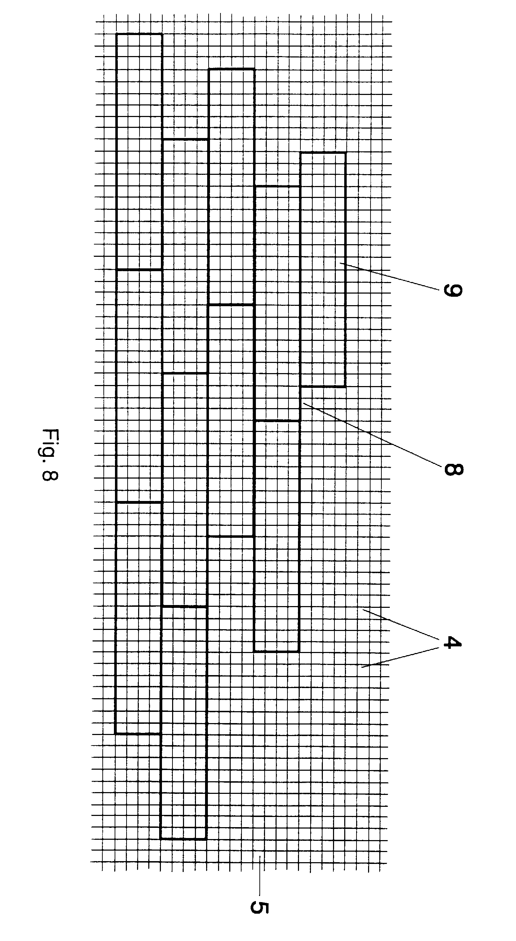

Fig. 8 zeigt ein Beispiel für eine Bitmap (5), bei der der jeweilige Versatz (8) der Schwellwert-Matrix bzw. der Bitmap-Bereiche (9) zufällig gewählt ist.

Insbesondere wenn man mit einem festen Versatzwert arbeitet, ist man nicht an die Verwendung von Schwellwert-Matrizen bzw. Schwellwertgebirgen mit rechteckiger Grundform gebunden. Solange sich diese fugenlos aneinanderfügen lassen, kann man jede beliebige Form wählen, z. B. auch L-förmige Schwellwert-Matrizen bzw. Schwellwertgebirge.

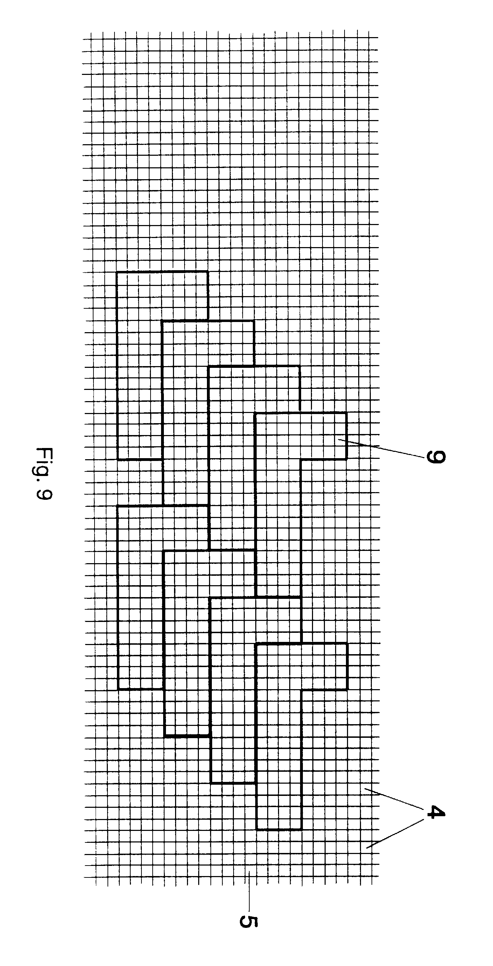

Fig. 9 zeigt ein weiteres Beispiel für eine frequenzmodulierte Rasterung mit verbesserter Wiederholung unter Verwendung einer nicht rechteckigen Grundform der Schwellwert-Matrix. In Weiterführung dieses Gedankens kann man auch mit mehreren Teilgebirgen arbeiten, die sich wiederum entsprechend zusammenfügen lassen.

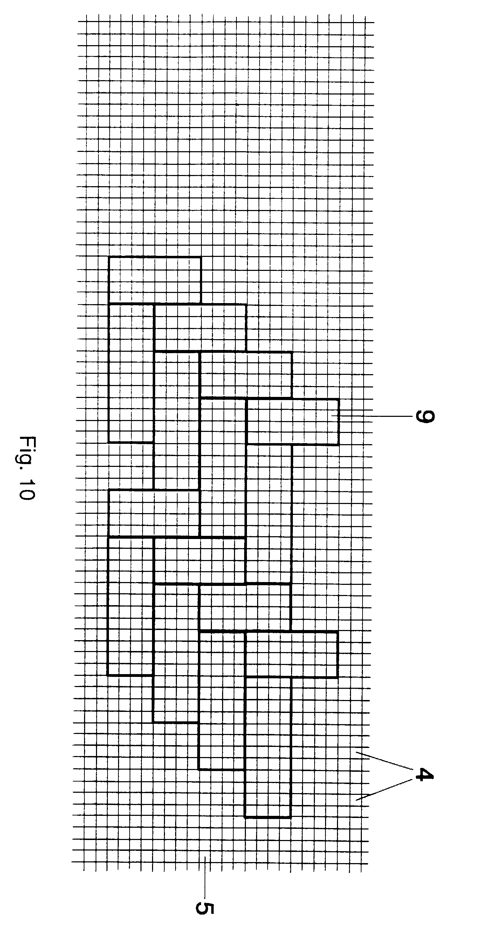

Fig. 10 zeigt ein Beispiel für eine frequenzmodulierte Rasterung mit verbesserter Wiederholung unter Verwendung mehrerer Teilschwellwertgebirge.

### 2. Minimierung der Strukturen innerhalb des Schwellwertgebirges:

Die einfachste Weise die Schwellwerte des Schwellwertgebirges für eine frequenzmodulierte Rasterung zu erzeugen, wäre die Reihenfolge der Vergabe der Schwellwerte durch einen Zufallszahlengenerator auszuwürfeln. Leider führt dieses Verfahren zu keinem guten Ergebnis, da die Gleichmäßigkeit des Zufalles zu wünschen übrig läßt. Dies führt dazu, daß bei bestimmten Tonwerten ein Teil der Schwellwerte auf kleiner Fläche zusammenklumpen. Dies führt zu sichtbaren Strukturen. Das nachfolgend beschriebene Verfahren vermindert diesen Nachteil entscheidend.

Der Einfachheit halber sei zunächst ein quadratisches Schwellwertgebirge vorrausgesetzt, dessen Breite und Höhe eine Potenz von 2 sei. Wird an der weiter oben getroffen Festlegung festgehalten, daß Schwellwerte zwischen 1 und 255 benutzt werden, so kommen je nach Größe des Schwellwertgebirges nicht alle Schwellwerte vor, oder Schwellwerte werden doppelt vergeben. Ziel des hier beschriebenen Verfahrens ist es, die Reihenfolge der zu vergebenen Schwellwerte festzulegen, nicht die Schwellwerte selbst.

Zweck des Verfahrens ist es, durch fortlaufende Quadrierung des Schwellwertgebirges und durch zufällige Bestimmung der Elemente in den Unterquadranten zwar eine zufällige Verteilung zu erreichen, aber über die gesamte Fläche eine annähernde Gleichverteilung der geschwärzten Devicepixel zu erreichen. Die Vorgehensweise bei der Bildung und Auswahl der Unterquadranten ist an das als "ordered dither" bekannt gewordene Verfahren angelehnt.

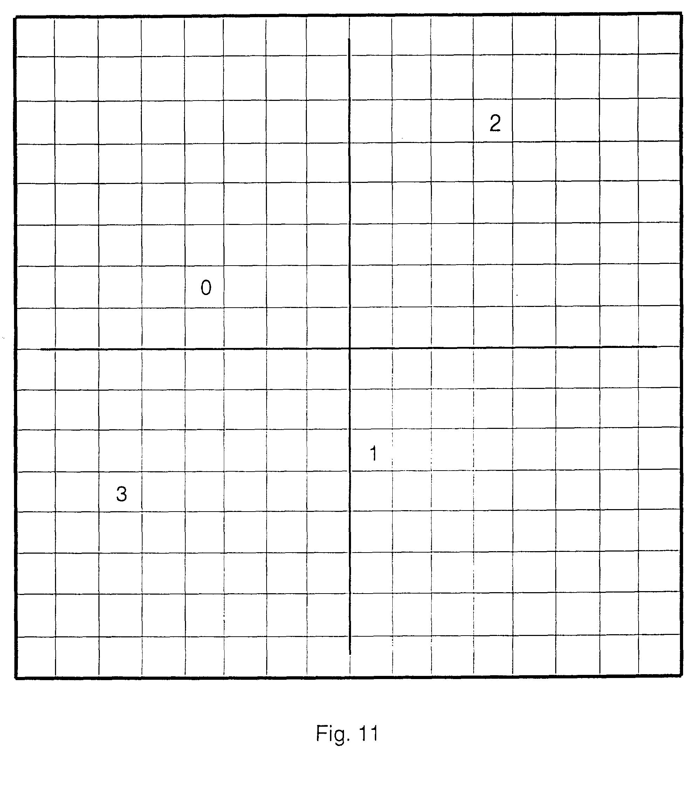

Fig.11 zeigt, wie für das 1. Element dieser Reihe per Zufallszahlengenerator ein Element aus dem Schwellwertgebirge bestimmt und ihm die Zahl 0 zugeordnet wird. Danach wird das Gebirge in 4 Quadranten 1. Ordnung unterteilt und in dem Quadranten der dem Quadranten gegenüberliegt, in dem sich das 1. Element befindet, per Zufallsgenerator das 2. Element der Reihe bestimmt und ihm die Ordnungszahl 1 zugewiesen. Danach wird mit den 2 verbleibenden Quadranten genauso verfahren.

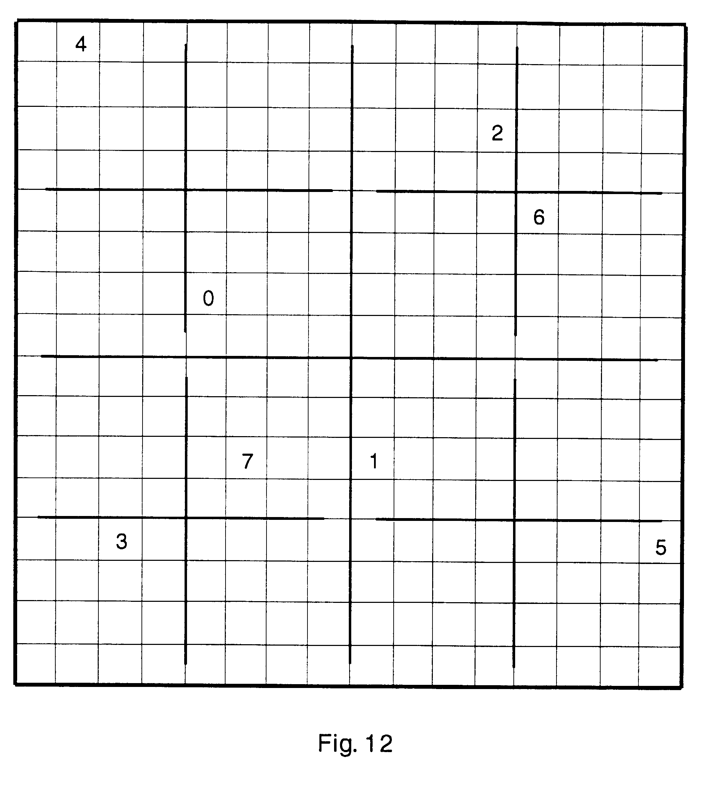

Als nächstes werden die 4 Quadranten 1. Ordnung in 4 Gruppen von 4 Quadranten 2. Ordnung unterteilt, wie Fig. 12 zeigt. Damit fallen die bisher vergebenen 4 Ordnungszahlen in je einen Quadranten 2. Ordnung in jeder Gruppe.

Im nächsten Schritt werden die Ordnungszahlen 4-7 vergeben. Und zwar wird wiederum per Zufallszahlengenerator je einem Quadranten 2. Ordnung aus jeder Gruppe eine Ordnungszahl zugeordnet. Der hierzu aus jeder Gruppe ausgewählte Quadrant ist derjenige, der dem Quadranten diagonal gegenüberliegt der bereits eine Ordnungszahl enthält. Sinn der Auswahl der diagonal gegenüberliegenden Quadranten ist es, eine höhere Gleichverteilung zu erreichen und die Vermeidung horizontaler und vertikaler Strukturen. Auch bei den Quadrantengruppen wird genauso verfahren, d.h. die Ordnungszahl 4 wurde in der oberen linken Gruppe vergeben, die nächste in der unteren rechten (diagonal gegenüberliegend), dann oben rechts und schließlich unten links, d. h. die es erfolgt eine kreuzweise Vergabe.

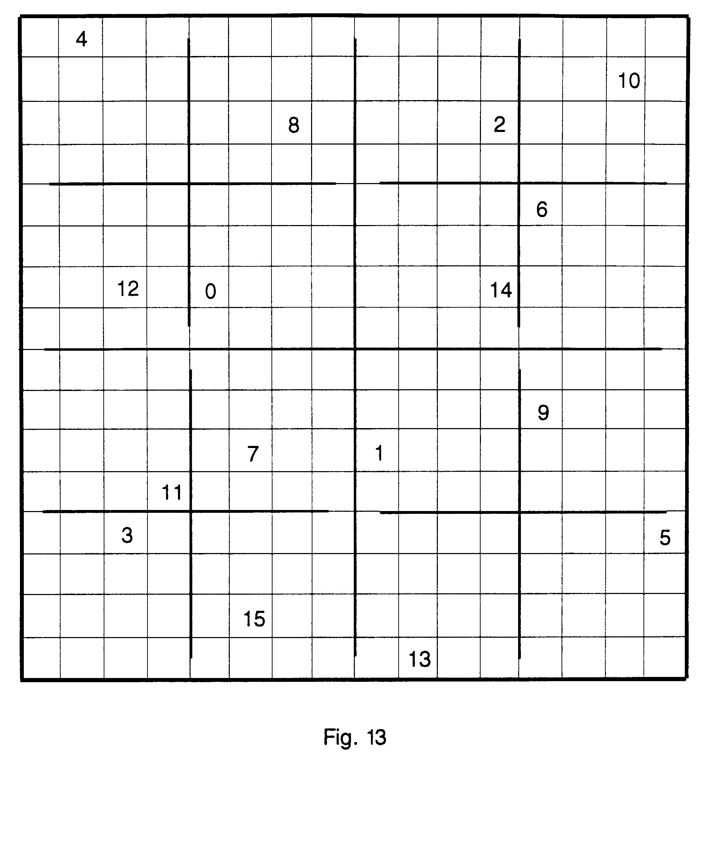

Bis jetzt sind je 2 Quadranten 2. Ordnung aus jeder Gruppe mit je einer Ordnungszahl belegt, in 2 weiteren Durchgängen wird jeweils ein Quadrant jeder Gruppe mit einer weiteren Ordnungszahl belegt, wie Fig. 13 zeigt.

Jetzt sind alle Quadranten 2. Ordnung mit einer Ordnungszahl belegt. Daher werden jetzt nacheinander 4 Gruppen von 4 Quadrantengruppen 3. Ordnung gebildet.

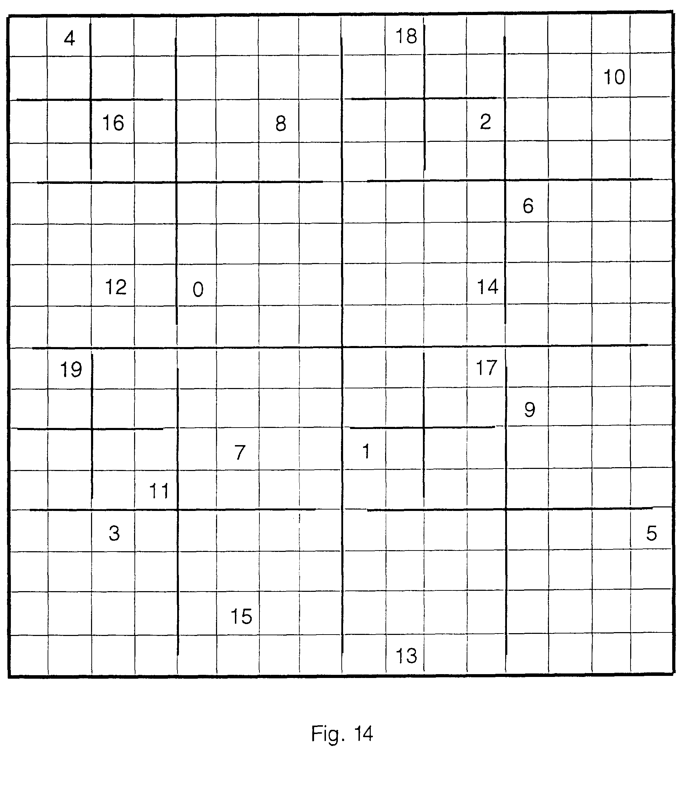

Zunächst wird eine Gruppe von 4 Quadrantengruppen gemäß Fig. 14 erzeugt. Sinn dieser Anordnung ist wiederum eine maximale Gleichverteilung. Die Vergabe der nächsten 4 Ordnungszahlen in den einzelnen Quadranten 3. Ordnung dieser Gruppe erfolgt wieder in der bereits beschriebenen Kreuzstruktur.

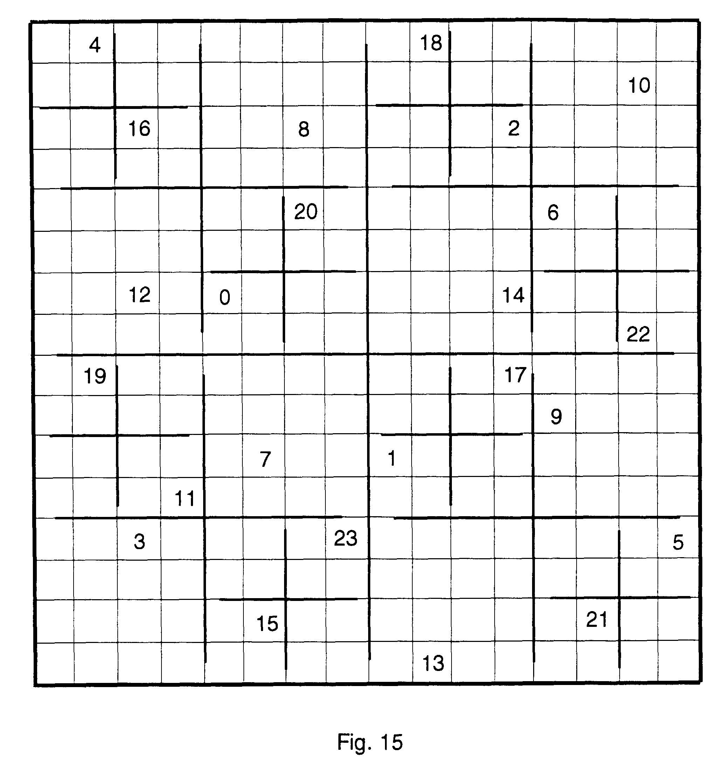

Danach wird eine weitere diagonal versetzte Gruppe von 4 Quadrantengruppen gebildet und mit 4 weiteren Ordnungszahlen belegt, wie Fig. 15 zeigt.

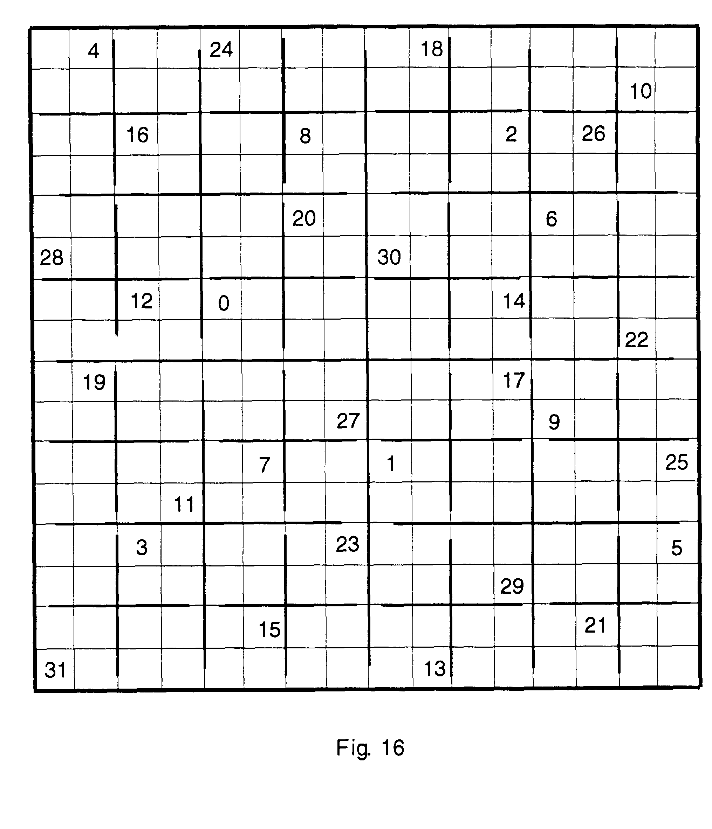

Dieser Vorgang wird noch zweimal wiederholt, wie in Fig. 16 gezeigt wird.

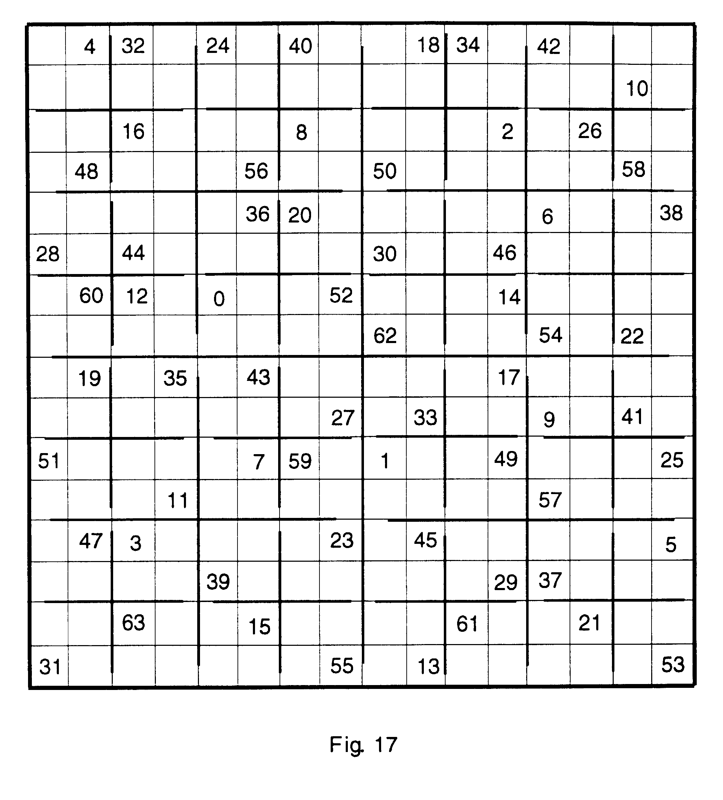

Fig. 17 zeigt, wie jetzt je 2 Quadranten einer Quadrantengruppe 3. Ordnung mit Ordnungszahlen belegt werden. Durch erneutes zweimaliges Abarbeiten der insgesamt 4 Gruppen von 4 Quadrantengruppen 3. Ordnung wird jedem dieser Quadranten eine Ordnungszahl zugewiesen.

Der Vorgang der Quadrantenbildung wird solange fortgesetzt, bis ein Quadrant nur noch aus einem Element besteht und allen Elementen des Schwellwertgebirges Ordnungszahlen zugewiesen sind. Danach werden die eigentlichen Schwellwerte vergeben.

Es sind mindestens 2 Abwandlungen des obigen Verfahrens denkbar:

Zum einen ergibt sich bei obigem Verfahren bei einem 50 %igen Tonwert sehr oft ein ausgeprägtes Schachbrettmuster der Devicepixel. Dies ist nicht immer erwünscht. Man kann daher, wenn die Quadranten nur noch aus einem Element bestehen, anstatt dem diagonal gegenüber liegenden einen beliebigen aus der Gruppe benutzen. Dies wirkt der Schachbrettbildung entgegen.

Zum anderen ist es für die dunkleren Tonwerte, bei denen man optisch weiße Devicepixel auf schwarzen Grund hat, günstiger das Verfahren zweizuteilen: Wenn man bei den Quadranten letzter Ordnung angekommen ist, vergibt man pro Quadrantengruppe nur 2 Ordnungszahlen, d. h. insgesamt werden nur 50 % der Elemente belegt. Damit hat man quasi alle Devicepixel auf weißen Grund gesetzt.

Danach wiederholt man den Vorgang der fortgesetzten Quadrierung noch einmal, man beginnt bei der Vergabe der Ordungszahlen aber mit der höchsten Zahl und vergibt sie in absteigender Reihenfolge. Dadurch schreibt man im Prinzip weiß auf schwarzen Grund und erhält eine bessere Verteilung in den dunklen Tonwerten.

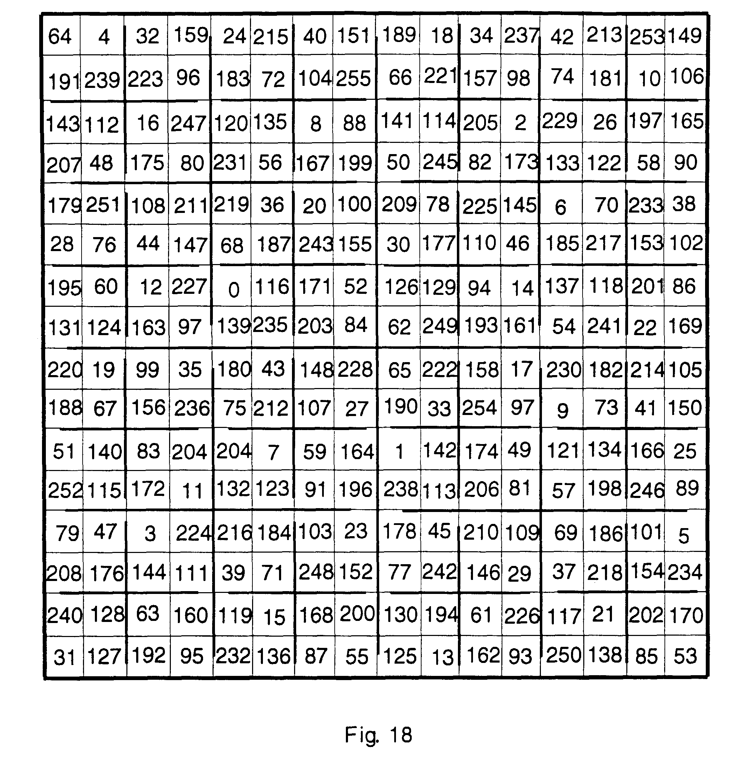

Fig. 18 zeigt ein vollständiges aus der Kombination beider beschriebener Abwandlungen entstandenen Schwellwertgebirges.

Die Beschreibung zur Vergabe der Ordnungszahlen war bisher auf quadratische Schwellwertgebirge beschränkt. Um nun auch die im 1. Teil erläuterten Schwellwertgebirge zu füllen, wählt man deren Abmessungen so, daß deren Höhe eine Potenz von 2 und deren Breite ein Vielfaches der Höhe ist und füllt sie mit einer entsprechenden Anzahl von nach obigen Verfahren erzeugten quadratischen Grundformen.

## Patentansprüche

1. Verfahren zur Optimierung von frequenzmodulierten Rastern für die Aufzeichnung von schwarz/weiß oder farbigen Rasterbildern, wobei das jeweils aufzuzeichnende Bild bildpunktweise optoelektronisch abgetastet und digital in Form von den einzelnen Bildpunkten zugeordneten Grauwerten in einem Bildpunktspeicher gespeichert wird und wobei mittels der Grauwerte Schwellwertentscheidungen durchgeführt werden, anhand der entschieden wird, ob bei der Aufzeichnung des Bildes ein Pixel gesetzt wird oder nicht und zur Schwellwertentscheidung ein zweidimensionaler Schwellwertspeicher verwendet wird, der in zweidimensionaler periodischer Wiederholung zur Durchführung der Schwellwertentscheidungen dem Bildpunktspeicher überlagert wird und dessen Schwellwerte so gewählt werden, daß sie innerhalb des Schwellwertspeichers (in einer dritten Dimension) eine Topographie, d.h. ein oder mehrere Schwellwertgebirge bilden, wobei die Ausdehnung des Schwellwertspeichers in einer Dimension größer gewählt wird als in der anderen Dimension dadurch gekennzeichnet, daß
a) bei der zweidimensionalen periodischen Wiederholung des Schwellwertspeichers in einer Dimension der Wiederholung mit einem Versatz gearbeitet wird,
b) die Ausdehnung des Schwellwertspeichers so gewählt wird, daß er in quadratische Unterspeicher unterteilt werden kann, die zusammen den gesamten Schwellwertspeicher bilden,
c) aus jedem Unterspeicher zufällig ein Element ausgewählt und diesem Element eine fortlaufende Ordnungszahl zugewiesen wird,
d) jeder Unterspeicher durch fortlaufende Vierteilung weiter unterteilt wird und hierbei in den Quadranten zufällig ausgewählten Elementen Ordnungszahlen zugewiesen werden und
e) den Elementen nach Maßgabe der Ordnungszahlen Schwellwerte zugewiesen werden.

2. Verfahren nach Anspruch 1, dadurch gekennzeichnet, daß mit konstantem Versatz gearbeitet wird.

3. Verfahren nach Anspruch 1, dadurch gekennzeichnet, daß mit einem variablen Versatz gearbeitet wird, der durch eine immer wieder zu bestimmende Zufallszahl bestimmt wird.

4. Verfahren nach einem der Ansprüche 1 bis 3, dadurch gekennzeichnet, daß
a) die Unterspeicher als Unterquadranten ausgebildet sind, die aus in Reihen angeordneten Elementen gebildet werden und
b) die Füllung der Elemente der Unterquadranten durch fortlaufende Vierteilung des Schwellwertgebirges und durch zufällige Bestimmung der Elemente in den Unterquadranten erfolgt.

5. Verfahren nach Anspruch 4, dadurch gekennzeichnet, daß
das erste Element einer Reihe mittels eines Zufallsgenerators aus dem Schwellwertgebirge ausgesucht und ihm die Zahl 0 zugeordnet wird,
b) das Schwellwertgebirge in vier Quadranten erster Ordnung unterteilt wird und in dem Quadranten erster Ordnung, der dem Quadranten erster Ordnung gegenüber liegt, in dem sich das erste Element befindet, das zweite Element der Reihe bestimmt und ihm die Ordnungszahl 1 zugeordnet wird (Fig. 11),
d) mit den zwei verbleibenden Quadranten erster Ordnung durch Vergabe der Ordnungszahlen 2 und 3 so verfahren wird, wie mit den beiden ersten Quadranten erster Ordnung (Fig. 12),
e) die vier Quadranten erster Ordnung in vier Gruppen von vier Quadranten zweiter Ordnung unterteilt werden (Fig. 12), wobei die vergebenen vier Ordnungszahlen jeweils in je einen Quadranten zweiter Ordnung innerhalb einer der vier Gruppen fallen,
f) die Ordnungszahlen 4 bis 7 jeweils einer Gruppe von vier Quadranten innerhalb der Quadranten zweiter Ordnung vergeben werden, wobei die Ordnungszahl demjenigen Quadranten zugeordnet wird, der dem Quadranten gegenüber liegt, der bereits eine der Ordnungszahlen 1 bis 3 enthält (Fig. 12),
f) in zwei weiteren Durchgängen jeweils ein Quadrant jeder Gruppe mit einer weiteren Ordnungszahl belegt wird (Fig. 13) bis alle Quadranten zweiter Ordnung mit einer Ordnungszahl belegt sind,
g) nacheinander vier Gruppen von Quadranten dritter Ordnung gebildet werden, wobei zunächst eine der vier Gruppen gebildet wird (Fig. 14) und vier Ordnungszahlen vergeben werden, dann eine weitere zu der ersten Gruppe diagonale Gruppe gebildet wird, die ebenfalls mit vier Ordnungszahlen belegt wird (Fig. 15) und anschließend eine dritte und vierte Gruppe gebildet werden, die ebenfalls jeweils mit vier Ordnungszahlen belegt werden,
h) der Vorgang nach Merkmal g) zweimal wiederholt wird (Fig. 16),
i) ein erneutes zweimaliges Abarbeiten der vier Gruppen von vier Quadrantengruppen dritter Ordnung erfolgt, wobei jedem dieser Quadranten eine Ordnungszahl zugeordnet wird (Fig. 1 7) und
j) den Elementen nach Maßgabe der Ordnungszahlen Schwellwerte zugewiesen werden.

6. Verfahren nach Anspruch 5, dadurch gekennzeichnet, daß die Vergabe der Ordnungszahlen im Falle, daß die Quadranten nur noch aus einem Element bestehen, nicht in das gegenüberliegende Element, sondern in ein beliebiges Element erfolgt.

7. Verfahren nach Anspruch 5, dadurch gekennzeichnet, daß bei Erreichen des Quadranten letzter Ordnung nur noch zwei Ordnungszahlen pro Quadrant vergeben werden.

8. Verfahren nach einem der Ansprüche 1 bis 7, dadurch gekennzeichnet, daß die Abmessungen der Schwellwertgebirge derart gewählt wird, daß deren Höhe eine Potenz von zwei und deren Breite ein Vielfaches der Höhe ist und daß sie mit einer Vielzahl von quadratischen Grundformen gefüllt werden.

## Claims

1. A method for optimizing, frequency-modulated screens for the recording of black/white or coloured screen images, the image which is to be recorded respectively being scanned optoelectronically by image point and stored digitally in an image point memory in the form of grey values associated with the individual image points, and threshold value decisions being carried out by means of the grey values, by means of which a decision is made as to whether or not a pixel is set in the recording of the image and for the threshold value decision a two-dimensional threshold value memory being used, which is superimposed on the image point memory in two-dimensional periodic repetition to carry out the threshold value decisions, and the threshold values of which are selected so that they form a topography within the threshold value memory (in a third dimension), i.e. form one or more threshold value ranges, the expansion of the threshold value memory being selected greater in one dimension than in the other dimension, characterised in that
a) with the two-dimensional periodic repetition of the threshold value memory in one dimension of the repetition, one operates with a shift,
b) the expansion of the threshold value memory is selected so that it can be divided into quadratic sub-memories which together form the entire threshold value memory,
c) from each sub-memory an element is randomly selected and a continuous ordinal number is allocated to this element,
d) each sub-memory is further subdivided by continuous quadripartition and in so doing randomly selected elements in the quadrants are allocated ordinal numbers and
e) threshold values are allocated to the elements in accordance with the ordinal numbers.

2. The method according to Claim 1, characterised in that it is carried out with a constant shift.

3. The method according to Claim 1, characterised in that it is carried out with a variable shift which is determined by a random number which is to be determined again and again.

4. The method according to one of Claims 1 to 3, characterised in that
a) the sub-memories are constructed as sub-quadrants which are formed from elements arranged in rows and
b) the filling of the elements of the sub-quadrants takes place by continuous quadripartition of the threshold value range and by random determining of the elements in the sub-quadrants,

5. The method according to Claim 4, characterised in that
a) the first element of a row is selected from the threshold value range by means of a random generator and it is allocated the number 0,
b) the threshold value range is divided into four quadrants of the first order, and in the quadrant of the first order, which lies opposite the quadrant of the first order, which the first element is situated, the second element of the row is determined and it is allocated the ordinal number 1 (Fig. 11),
c) with the two remaining quadrants of the first order, through placing the ordinal numbers 2 and 3, one proceeds as with the first two quadrants of the first order (Fig. 12),
d) the four quadrants of the first order are divided into four groups of four quadrants of the second order (Fig. 12), the set four ordinal numbers respectively falling each into one quadrant of the second order within one of the four groups,
e) the ordinal numbers 4 to 7 are respectively set to a group of four quadrants within the quadrants of the second order, the ordinal number being allocated to the quadrant which ties opposite the quadrant which already contains one of the ordinal numbers 1 to 3 (Fig. 12),
f) in two further passes respectively one quadrant of each group is covered with a further ordinal number (Fig. 13), until all the quadrants of the second order are covered with an ordinal number,
g) four groups of quadrants of the third order are formed in succession, in which firstly one of the four groups is formed (Fig. 14) and four ordinal numbers are set, then a further group is formed diagonal to the first group, which further group is likewise covered with four ordinal numbers (Fig. 15) and then a third and fourth group are formed, which are likewise respectively covered with four ordinal numbers,
h) the procedure according to feature g) is repeated twice (Fig. 16),
i) a renewed working twice of the four groups of four quadrant groups of the third order takes place, in which an ordinal number is allocated to each of these quadrants (Fig. 17) and
j) threshold values are allocated to the elements according to the ordinal numbers.

6. The method according to Claim 5, characterized in that in the case where the quadrants only still consist of one element, the setting of the ordinal numbers does not take place into the opposite element but into any desired element.

7. The method according to Claim 5, characterized in that on reaching the quadrant of the last order, only two ordinal numbers are set per quadrant.

8. The method according to one of Claims I to 7, characterized in that the dimensions of the threshold value range are selected such that their height is a power of two and their width is a multiple of the height and that they are filled with a plurality of quadratic basic forms.

## Revendications

1. Procédé pour optimiser le tramage modulé en fréquence pour l'enregistrement d'images tramées en noir/blanc ou en couleurs, selon lequel,
- on détecte chaque fois l'image enregistrée, point par point, par voie optoélectronique et on l'enregistre sous forme numérique de valeurs de gris associées aux différents points image dans une mémoire de points image et,
- on prend des décisions de seuil avec les valeurs de gris, par lesquelles on décide si à l'enregistrement de l'image on utilise un pixel ou non, et pour la décision relative à la valeur de seuil, on utilise une mémoire à seuil, bidimensionnelle combinée dans la mémoire de points image dans une répétition périodique bidimensionnelle pour l'exécution des décisions relative aux valeurs de seuil, les valeurs de seuil étant choisies pour qu'à l'intérieur de la mémoire à valeurs de seuil (dans une troisième dimension), elle forme une topographie, c'est-à-dire une ou plusieurs montagnes de seuils, et l'extension de la mémoire à valeurs de seuil est choisie plus grande dans une dimension que dans l'autre dimension,
caractérisé en ce que
a) pour une répétition périodique bidimensionnelle de la mémoire à valeurs de seuil dans une dimension, on traite la répétition avec un décalage,
b) l'extension de la mémoire à valeurs de seuil est choisie pour pouvoir être subdivisée en sous-mémoires quadratiques formant en combinaison l'ensemble de la mémoire à valeurs de seuil,
c) à partir de chaque sous-mémoire, on sélectionne de façon aléatoire un élément et on attribue à cet élément un numéro d'ordre continu,
d) on continue de subdiviser chaque sous-mémoire par une division par quatre, suivie, et dans les quadrants des éléments sélectionnés de manière aléatoire, on associe des numéros d'ordre,
e) on attribue les éléments des valeurs de seuil en fonction des numéros d'ordre.

2. Procédé selon la revendication 1,
caractérisé en ce qu'
on travaille avec un décalage constant.

3. Procédé selon la revendication 1,
caractérisé en ce qu'
on travaille avec un décalage variable défini par un nombre aléatoire qui est toujours défini de nouveau.

4. Procédé selon l'une des revendications 1 à 3
caractérisé en ce que
a) les sous-mémoires sont réalisées sous la forme de sous-quadrants constitués par des éléments disposés en rangée et,
b) on remplit les éléments des sous-quadrants par une division par quatre, suivie de la montagne des valeurs de seuil et par détermination aléatoire des éléments dans les sous-quadrants.

5. Procédé selon la revendication 4,
caractérisé en ce que
le nombre 0 est attribué au premier élément d'une série par un générateur aléatoire à partir d'une recherche dans la montagne de valeurs de seuil,
b) on subdivise la montagne de valeurs de seuil en quatre quadrants du premier ordre et dans le quadrant du premier ordre qui est en regard du quadrant du premier ordre occupé par le premier élément, on définit le second élément de la série et on lui attribue le numéro d'ordre 1 (figure 11),
d) avec les deux quadrants restants du premier ordre, on procède en attribuant les numéros d'ordre 2 et 3 comme pour le premier quadrant du premier ordre (figure 12),
e) on subdivise les quatre quadrants du premier ordre en quatre groupes de quatre quadrants du deuxième ordre (figure 12), et les quatre numéros d'ordre attribués tombent chaque fois dans un quadrant du second ordre à l'intérieur de l'un des quatre groupes,
f) on attribue les numéros d'ordre 4 à 7 chaque fois à un groupe de quatre quadrants à l'intérieur des quadrants du deuxième ordre et on attribue au quadrant en regard du quadrant qui contient déjà l'un des numéros d'ordre 1 à 3, le numéro d'ordre (figure 12),
f) au cours de deux autres passages, on occupe chaque fois un quadrant de chaque groupe avec un autre numéro d'ordre (figure 13) jusqu'à ce que tous les quadrants du second ordre soient occupés d'un numéro d'ordre,
g) successivement, on forme quatre groupes de quadrants du troisième ordre et on forme tout d'abord un des quatre groupes (figure 14) et on attribue quatre numéros d'ordre puis, on forme un autre groupe en diagonale par rapport au premier groupe, que l'on occupe également avec quatre numéros d'ordre (figure 15) puis, on forme un troisième et un quatrième groupe qui sont également occupés chaque fois par quatre numéros d'ordre,
h) on répète deux fois l'opération selon la caractéristique g) (figure 16),
i) on traite de nouveau deux fois les quatre groupes de quatre quadrants du troisième ordre et on attribue un numéro d'ordre à chacun de ces quadrants (figure 17) et,
j) selon l'indication du numéro d'ordre, on attribue aux éléments des valeurs de seuil.

6. Procédé selon la revendication 5,
caractérisé en ce qu'
dans le cas où les quadrants ne se composent plus que d'un élément, on attribue les numéros d'ordre non pas à l'élément opposé, mais à un élément quelconque.

7. Procédé selon la revendication 5,
caractérisé en ce que
lorsqu'on atteint le quadrant du dernier ordre, on n'attribue plus que deux numéros d'ordre par quadrant.

8. Procédé selon l'une des revendications 1 à 7,
caractérisé en ce qu'
on sélectionne les dimensions des montagnes à valeurs de seuil de façon que leur hauteur représente une puissance de deux et que la largeur représente un multiple de la hauteur et on les remplit d'un grand nombre de formes de base quadratique.
